(19) Europäisches Patentamt / European Patent Office / Office européen des brevets

(11) **EP 4 203 459 B1**

(12) **EUROPEAN PATENT SPECIFICATION**

(45) Date of publication and mention of the grant of the patent:
**15.07.2026 Bulletin 2026/29**

(21) Application number: **21860402.3**

(22) Date of filing: **24.08.2021**

(51) International Patent Classification (IPC):
$H04N\ 23/76^{(2023.01)}$   $H04N\ 23/72^{(2023.01)}$
$H04N\ 23/71^{(2023.01)}$   $H04N\ 23/73^{(2023.01)}$

(52) Cooperative Patent Classification (CPC):
**H04N 23/73; H04N 23/71; H04N 23/72; H04N 23/76**

(86) International application number:
**PCT/CN2021/114365**

(87) International publication number:
**WO 2022/042567 (03.03.2022 Gazette 2022/09)**

(54) **METHOD, APPARATUS, AND DEVICE FOR DETERMINING EXPOSURE PARAMETER OF HEAD-MOUNTED DEVICE**

VERFAHREN, VORRICHTUNG UND EINRICHTUNG ZUR BESTIMMUNG DES BELICHTUNGSPARAMETERS EINER KOPFMONTIERTEN EINRICHTUNG

PROCÉDÉ, APPAREIL ET DISPOSITIF POUR DÉTERMINER UN PARAMÈTRE D'EXPOSITION D'UN DISPOSITIF MONTÉ SUR LA TÊTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2020  CN 202010857729**

(43) Date of publication of application:
**28.06.2023  Bulletin 2023/26**

(73) Proprietor: **Qingdao Pico Technology Co., Ltd.**
**Qingdao, Shandong 266000 (CN)**

(72) Inventor: **WU, Tao**
**Shandong 266000 (CN)**

(74) Representative: **Marks & Clerk LLP**
**15 Fetter Lane**
**London EC4A 1BW (GB)**

(56) References cited:
WO-A2-2011/157245       CN-A- 106 657 806
CN-A- 108 989 689        CN-A- 110 708 472
CN-A- 111 225 160        CN-A- 111 343 388
CN-A- 112 153 360        JP-A- 2006 317 406
US-A1- 2003 184 673      US-A1- 2013 235 232
US-A1- 2019 273 859

• ANONYMOUS: "Exponential smoothing - Wikipedia", 4 August 2020 (2020-08-04), XP093124444, Retrieved from the Internet <URL:https://web.archive.org/web/20200804202258/https://en.wikipedia.org/wiki/Exponential_smoothing#Triple_exponential_smoothing> [retrieved on 20240126]

## Description

### CROSS-REFERENCE TO RELATED APPLICATIONS

This application claims the priority of the Chinese Patent Application with application No. 202010857729.6, filed on August 24, 2020, entitled "A METHOD, APPARATUS AND DEVICE FOR DETERMINING EXPOSURE PARAMETERS OF HEAD-MOUNTED DEVICES".

### TECHNICAL FIELD

The present application relates to the field of image processing, and more particularly, to a method for determining exposure parameters of a head-mounted device, an apparatus for determining exposure parameters of a head-mounted device, a head-mounted device, and a computer-readable storage medium.

### BACKGROUND

Gesture recognition and tracking, SLAM (Simultaneous Localization and Mapping), space object recognition and tracking, joystick controller detection and tracking and other technologies have become important components of realizing human-computer interaction in head-mounted devices (such as mixed reality head-mounted devices, augmented reality head-mounted devices and mixed reality devices) applications. However, when realizing technologies such as gesture recognition and tracking, SLAM, space object recognition and tracking, joystick controller detection and tracking and the like, image quality of a camera in a head-mounted device directly affects key indicators such as precision and latency of the final recognition and tracking.

At present, in order to improve the key indicators such as the excellent precision and latency of recognition and tracking of gesture recognition and tracking, SLAM, space object recognition and tracking, joystick controller detection and tracking and the like, it is usually desired that the brightness and darkness of two adjacent frame images obtained by a camera have a smooth transition, while contrast difference between the previous and next frame images that is too bright or too dark is not allowed. However, existing method to achieve a smooth transition between the brightness and darkness of two adjacent frame images collected by a camera is generally: provide a preset exposure table, and set exposure parameter values round-robin according to the exposure parameter values in the exposure table, until the average brightness value of the images collected by using a set of exposure parameter values approximates the preset brightness value, ends the exposure and outputs the exposed images.

Particularly, WO2011157245A2 provides an automatic exposure method, device, and imaging apparatus. The method comprises: acquiring a brightness value for a current surrounding; on the basis of a correlation between a preset range of surrounding brightness and a search range for exposure value, determining a current exposure value search range matching the current surrounding brightness value; determining an optimum exposure value within the current exposure value search range for the, and performing an automatic exposure on the basis of the optimum exposure value.

JP 2006317406 provides an exposure detection setting section 309, which sets an exposure condition at a next imaging time based on the luminance value of the imaged cell images imaged every visual field in past times, and an imaging section 201 images cells, which sets every visual field at the next imaging time according to each exposure condition.

### SUMMARY

The present application provides a new technical solution for determining exposure parameters of a head-mounted device.

The invention is set out in the appended set of claims.

Other features and advantages of the present application will become apparent from the following detailed description of exemplary embodiments of the present application with reference to the accompanying drawings.

### BRIEF DESCRIPTION OF THE DRAWINGS

The accompanying drawings, which are incorporated in and constitute a part of the specification, illustrate embodiments of the application and explain principles of the application together with the description thereof.

FIG. 1 is a block diagram of a hardware configuration of a head-mounted device for implementing a method for determining exposure parameters of the head-mounted device provided according to an embodiment of the present application;

FIG. 2 is a schematic flowchart of a method for determining exposure parameters of a head-mounted device provided by an embodiment of the present application;

FIG. 3 is a schematic structural diagram of an apparatus for determining exposure parameters of a head-mounted device provided by an embodiment of the present application;

FIG. 4 is a schematic structural diagram of a head-mounted device provided by an embodiment of the present application.

## DETAILED DESCRIPTION

Various exemplary embodiments of the present application will now be described in detail with reference to the accompanying drawings. It should be noted that the relative arrangement of the components and steps, the numerical expressions and numerical values set forth in these embodiments do not limit the scope of the present application unless specifically stated otherwise.

The following description of at least one exemplary embodiment is merely illustrative in nature and in no way limits the application, its application, or uses in any way.

Techniques, methods, and devices known to those of ordinary skill in the relevant art may not be discussed in detail, but where appropriate, such techniques, methods, and devices should be considered part of the specification.

In all examples shown and discussed herein, any specific value should be construed as illustrative only and not as limiting. Accordingly, other examples of exemplary embodiments may have different values.

It should be noted that like numerals and letters refer to like items in following drawings, therefore, once an item is defined in one drawing, it does not require further discussion in subsequent drawings.

Head-mounted devices usually move freely with a certain speed. Therefore, the change of brightness and darkness between two adjacent frame images is relatively drastic. Using the existing method of setting the exposure parameters round-robin according to the exposure table, it is very difficult to make the average brightness value of the collected images to approximate the preset brightness value in a short time. This will have a negative impact on realizing technologies such as gesture recognition and tracking, SLAM, space object recognition and tracking, and joystick controller detection and tracking.

### <Example of hardware configuration>

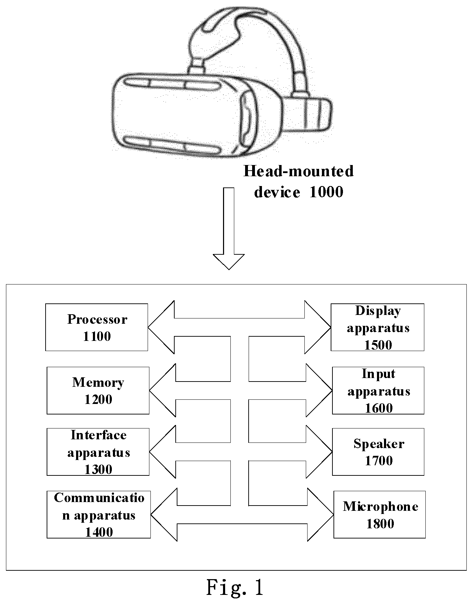

FIG. 1 is a block diagram of a hardware configuration of a head-mounted device for implementing a method for determining exposure parameters of the head-mounted device provided according to an embodiment of the present application.

The head-mounted device 1000 may be a virtual reality VR head-mounted device, a mixed reality MR head-mounted device, or an augmented reality head-mounted device.

The head-mounted device 1000 may include a processor 1100, a memory 1200, an interface apparatus 1300, a communication apparatus 1400, a display apparatus 1500, an input apparatus 1600, a speaker 1700, a microphone 1800, and the like. Wherein, the processor 1100 may be a central processing unit CPU, a microprocessor MCU, or the like. Wherein, the memory 1200 includes, for example, a ROM (Read Only Memory), a RAM (Random Access Memory), a nonvolatile memory such as a hard disk, and the like. The interface apparatus 1300 includes, for example, a USB interface, an earphone interface, and the like. The communication apparatus 1400 is capable of, for example, wired or wireless communication. The display apparatus 2500 is, for example, a liquid crystal display, a touch display, or the like. The input apparatus 1600 may include, for example, a touch screen, a keyboard, and the like. A user can input/output voice information through the speaker 1700 and the microphone 1800.

Although a plurality of apparatus are shown for the head-mounted device 1000 in FIG. 1, the present application may only involve in some of the apparatus. For example, the head-mounted apparatus 1000 only involves in the memory 1200 and the processor 1100.

Applied to the embodiments of the present application, the memory 1200 of the head-mounted device 1000 is used to store instructions, which are used to control the processor 1100 to execute the method for determining exposure parameters of the head-mounted device provided by the embodiments of the present application.

In above descriptions, the skilled person can design instructions according to the solutions disclosed in the present application. How the instructions control the processor to operate is well known in the art, therefore it will not be described in detail here.

### <Method Embodiment>

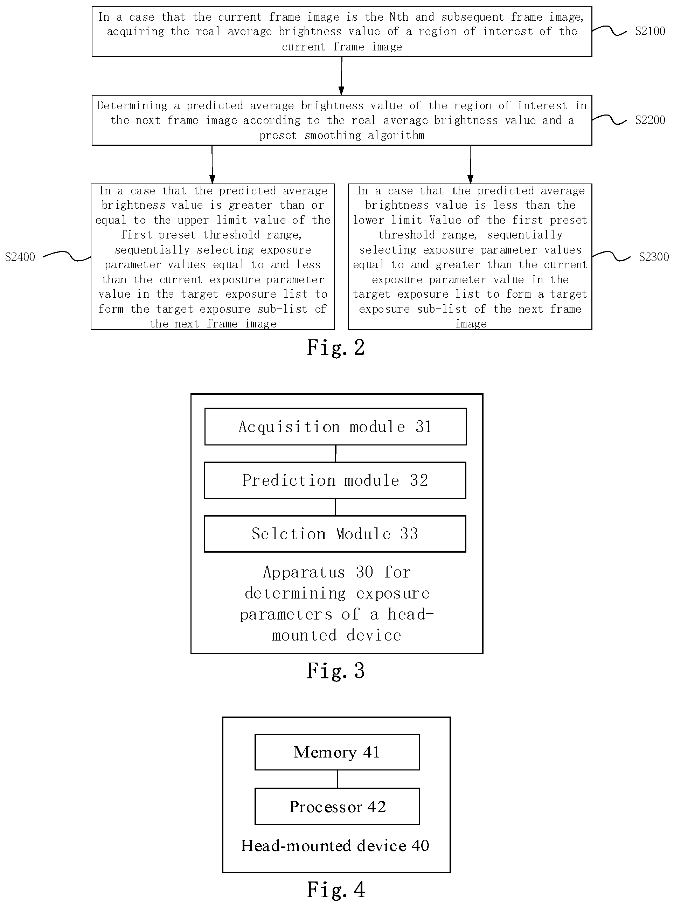

As shown in FIG. 2, an embodiment of the present application provides a method for determining exposure parameters of a head-mounted device, where the head-mounted device is any one of a mixed reality device, an augmented reality device, and a virtual reality device.

The method comprises the following S2100-S2400:

S2100. In a case that the current frame image is the Nth and subsequent frame image, acquiring the real average brightness value of a region of interest of the current frame image.

Wherein, N is a positive integer greater than or equal to 2;

In the embodiment of the present application, in a case that the current frame image is the Nth and subsequent frame image, it indicates that the head-mounted device has the possibility of moving at a certain motion speed. At this time, in order to make the average brightness value of a region of interest of the current frame image to approximate a preset brightness value in a short time, the method for determining exposure parameters of the head-mounted device provided by the embodiment of the present application is executed.

In addition, corresponding to above S2100, in a case that the current frame image is an image before the Nth frame, it indicates that the head-mounted device is in a state of just starting up and with low speed, and at this time, setting the exposure parameter values in a sequential round-robin manner according to a target exposure list can quickly make the brightness value of the region of interest of the current frame image to be within a first preset threshold range.

In the embodiment of the present application, the first preset threshold range is a range of brightness values that approximate a preset brightness value.

In the embodiment of the present application, the amount of computation of the head-mounted device can effectively reduced by using the real average brightness value of the region of interest of the current frame image to represent the real average brightness value of the current frame image.

In one embodiment, the region of interest of the current frame image may be: a region in the current frame image that coincides with the center of the current frame image, and whose length is smaller than that of the current frame image and whose width is smaller than that of the current frame image.

In the embodiment of the present application, since the real average brightness value in the above S2100 is within the first preset threshold range, the real average brightness value in the above S2100 can also be determined according to the first preset threshold range.

In the embodiment of the present application, the calculation method of the average brightness value of an image is well known to those skilled in the art, and details of which will not described herein again.

S2200. Determining a predicted average brightness value of the region of interest in the next frame image according to the real average brightness value and a preset smoothing algorithm.

In the embodiment of the present application, the preset smoothing algorithm is a method for obtaining a predicted value of next period according to an observed value of current period. Wherein, the observed value in the current period corresponds to the real average brightness value in the above S2100, and the predicted value in the next period corresponds to the predicted average brightness value in the above S2200.

In one embodiment, the preset smoothing algorithm may be any one of a first-order exponential smoothing algorithm, a second-order exponential smoothing algorithm, or a third-order exponential smoothing algorithm.

In one example, taking the preset smoothing algorithm being the third-order exponential smoothing algorithm as an example, the specific implementation of the above S2200 is described by the following formula of the third-order exponential smoothing algorithm:

$$S_t^2 = \alpha * S_t^1 + (1 - \alpha) * S_{t-1}^2;$$

$$S_t^3 = \alpha * S_t^2 + (1 - \alpha) * S_{t-1}^3;$$

$$b_t = 3 * S_t^1 - 3 * S_t^2 + S_t^3;$$

$$c_t = \alpha * ((6 - 5 * \alpha) * S_t^1 - (10 - 8 * \alpha) * S_t^2 + (4 - 3 * \alpha) * S_t^3)/(2 * (1 - \alpha)^2)$$

;

$$d_t = \alpha^2 * (S_t^1 - 2S_t^2 + S_t^3)/(1 - \alpha)^2;$$

$$F_{t+1} = b_t + c_t + d_t/2。$$

Wherein, t represents the number of frames;

$S_t^1$ represents an one-order exponential smoothing value of the current frame image, corresponding to the real average brightness value in the above S2100;

$\alpha$ is a smoothing coefficient, in the embodiment of the present application, $\alpha$ can be set to 0.88;

$S_{t-1}^2$ is a second-order exponential smoothing value of the previous frame image;

$S_t^2$ is a second-order exponential smoothing value of the current frame image;

$S_t^3$ is a third-order exponential smoothing value of the current frame image;

$S_{t-1}^3$ is a third-order exponential smoothing value of the previous frame image;

$b_t$, $c_t$, $d_t$ are intermediate quantities of the third-order exponential smoothing algorithm;

$F_{t+1}$ represents the predicted average brightness value in the above S2200;

And, where t=1, $S_{t-1}^2 = S_{t-1}^3 = S_t^1$.

It is understood that where $S_{t-1}^2 = S_{t-1}^3 = S_t^1$, and $S_t^1$ is known, $S_{t-1}^2$、 $S_{t-1}^3$ are known.

S2300. In a case that the predicted average brightness value is less than the lower limit value of the first preset threshold range, sequentially selecting exposure parameter values equal to and greater than the current exposure parameter value in the target exposure list to form a target exposure sub-list of the next frame image.

Wherein, the target exposure list includes multiple sets of exposure parameter values, and one set of exposure parameter values includes one gain and one exposure duration.

Based on above content, it can be known that the method for determining exposure parameters of a head-mounted device provided by the embodiment of the present application further comprises a step of acquiring current exposure parameter values. This step includes the following S2310-S2312:

S2310. In a case that the current frame image is an image before the Nth frame, setting exposure parameter values in a sequential round-robin manner according to the target exposure list, until the average brightness value of the region of interest of the current frame image collected by using corresponding exposure parameter values is within the first preset threshold range.

In the embodiment of the present application, in a case that the current frame image is an image before the Nth frame, it characterizes that the head-mounted device is in a state of just starting up and with low speed, and at this time, setting the exposure parameter values in a sequential round-robin manner according to a target exposure list can quickly make the brightness value of the region of interest of the current frame image to be within a first preset threshold range.

S2311. In a case that the current frame image is the image after the Nth frame, setting exposure parameter values in a sequential round-robin manner according to a target exposure sub-list of the current frame image, until the average brightness value of the region of interest of the current frame image collected by using corresponding exposure parameter values is within the first threshold range.

In the embodiment of the present application, in a case that the current frame image is an image after N frames, it indicates that the head-mounted device has the possibility of moving at a certain motion speed. At this time, above steps S2100-S2400 are triggered, the target exposure sub-list of the current frame image can be obtained. Further, according to the target exposure sub-list, the parameter values are exposed in a sequential round-robin manner until the average brightness value of the region of interest in the current frame image collected by using corresponding exposure parameter values is within the first threshold range.

S2312. Using exposure parameter values corresponding to the current frame image as current exposure parameter values.

In the embodiment of the present application, the product of the gain and the exposure duration in the exposure parameter values is used to represent the size of the exposure parameter values.

In the embodiment of the present application, in a case that the predicted average brightness value is less than the lower limit value of the first preset threshold range, it indicates that when current exposure parameter values are applied to the next frame image, the average brightness value of the region of interest in the next frame image is bit low. Therefore, exposure parameter values of the next frame image need to be greater than or equal to the current exposure parameters. On this basis, an exposure parameter list composed of exposure parameter values equal to and greater than the current exposure parameter value in the target exposure list is used as a target exposure sub-list applicable to the next frame image.

S2400. In a case that the predicted average brightness value is greater than or equal to the upper limit value of the first preset threshold range, sequentially selecting exposure parameter values equal to and less than the current exposure parameter value in the target exposure list to form the target exposure sub-list of the next frame image.

In the embodiment of the present application, in a case that the predicted average brightness value is greater than or equal to the upper limit value of the first preset threshold range, it indicates that when the current exposure parameter values are applied to the next frame image, the average brightness value of the region of interest of the next frame image is bit high. Therefore, exposure parameter values of the next frame image need to be less than or equal to the current exposure parameters. On this basis, an exposure parameter list composed of exposure parameter values equal to and less than the current exposure parameter value in the target exposure list is used as a target exposure sub-list applicable to the next frame image.

In the embodiment of the present application, in a case that the current frame image is the Nth and subsequent frame image, it indicates that the head-mounted device has the possibility of moving at a certain motion speed. At this time, based on the real average brightness value of the region of interest in the current frame image, the predicted average brightness value of the region of interest in the next frame image is obtained by prediction. In a case that the predicted average brightness value is less than the lower limit value of the first preset threshold range, exposure parameter values equal to and greater than the current exposure parameter value in the target exposure list are sequentially selected to form a target exposure sub-list of the next frame image. And, in a case that the predicted average brightness value is greater than or equal to the upper limit value of the first preset threshold range, exposure parameter values equal to and less than the current exposure parameter value in the target exposure list are sequentially selected to form a target exposure sub-list of the next frame image. In this way, since the number of exposure parameters in the target exposure sub-list is less than the number of exposure parameters in the target exposure list, the range of exposure parameter values selected in the exposure process of the next frame image is narrowed, so that the average brightness value of the region of interest in the current frame image is enabled to be within the first preset threshold range in a short time, that is, the average brightness value of the region of interest in the current frame image is enabled to approximate to the preset brightness value in a short time.

In addition, it has been proved by experiments that when exposure parameters are set based on a target exposure sub-list, generally, when setting exposure parameter values at the second or third time, the obtained average brightness value of the region of interest of the image can reach the first preset threshold range. In this way, compared with the traditional way of setting exposure parameters round-robin according to a target exposure list, the average brightness value of the region of interest in the current frame image can be enabled quickly to be within the first preset threshold range.

In one embodiment, the above target exposure list is an exposure list obtained by changing on the basis of the default exposure list of the head-mounted device. Based on this, the embodiment of the present application further includes a step of acquiring the target exposure list. This step includes the following S2510-S2512:

S2510. Acquiring an initial exposure list of the head-mounted device.

In the embodiment of the present application, the initial exposure list of the head-mounted device is a default exposure list that is preset and stored in the head-mounted device.

S2511. Determining a gain value in the target exposure list according to a gain value in the initial exposure list.

In the embodiment of the present application, the specific implementation of the above S2511 is to determine the minimum gain value in the initial exposure list as the gain value in the target exposure list.

The specific implementation of the above S2511 is also to arrange all gain values in the initial exposure list in ascending order, and use any one of gain values in a preset percentage from a front portion of the gain values arranged in ascending order as a gain value in the target exposure list.

In the embodiment of the present application, all gain values in the target exposure list are the same, that is, gain values corresponding to different exposure durations in the target exposure list are the same.

In the embodiment of the present application, by selecting a relatively small gain value in the initial exposure list as each gain value in the target exposure list, in this way, the signal-to-noise ratio of the image collected by the head-mounted device can be improved.

S2512. Extending an exposure duration in the initial exposure list to obtain an exposure duration in the target exposure list.

In the embodiment of the present application, the specific implementation of the above S2512 is: fitting exposure durations in the initial exposure list to obtain a curve of the exposure durations. Extending both endpoints of the curve of the exposure durations. Adding the exposure duration corresponding to the extended portion of the curve to the initial exposure list to obtain the target exposure list.

Wherein, the exposure parameter values in the target exposure list are arranged in ascending order according to corresponding exposure durations.

In the embodiment of the present application, by extending exposure durations in the initial exposure list, the initial exposure list is extended, which can improve brightness range of the environment in which the head-mounted device is used. Specifically, the head-mounted device can be used in a darker or brighter environment.

In one embodiment, the method for determining exposure parameters of a head-mounted device provided by an embodiment of the present application further comprises following S2520-S2524:

S2520. Acquiring scene images of M scenes using each set of exposure parameter values in the target exposure list. Wherein, M is a positive integer greater than or equal to 1.

In the embodiment of the present application, exemplarily, the M scenes can be: a living room with lights on, a bedroom with lights on, an office with lights on, an exhibition venue with lights on, a factory with lights on, a living room with lights off, a bedroom with lights off, an office with lights off, an exhibition venue with lights-off, a factory with lights off, etc., respectively.

It should be noted that, in the embodiment of the present application, the number and specific forms of the M scenes are not limited. The M scenes may cover all application scenes of the head-mounted device.

In one example, the target exposure list may include 40 sets of exposure parameter values, and M=260. In this way, based on the above S4320, 40*260 exposed scene images can be obtained.

In one embodiment, scene images of the M scenes may be prestored in the head-mounted device.

S2521. For a scene image of each scene, determining an offset by which the average brightness value of the region of interest of corresponding scene image deviates from the first preset threshold range.

S2522. Counting the number of corresponding scene images corresponding to the offset greater than a preset offset.

In the embodiment of the present application, the offset deviating from the first preset threshold refers to, in a case that the average brightness value of a region of interest of corresponding scene image is greater than the upper limit value of the first preset threshold range, the difference between the average brightness value of the region of interest of corresponding scene image and the upper limit value, and, in a case that the average brightness value of the region of interest of corresponding scene image is less than the lower limit value of the first preset threshold range, the difference between the average brightness value of the region of interest of corresponding scene image and the lower limit value.

In the embodiment of the present application, the preset offset may be set base on experience. In one example, the preset offset may be set to 5 or 7.

S2523. In a case that the number is less than a preset threshold, determining that the head-mounted device is suitable for corresponding scene.

Corresponding to above S2523, in a case that the number is greater than or equal to the preset threshold, determining that the head-mounted device is not suitable for corresponding scene.

In the embodiment of the present application, the preset threshold may be set based on experience.

Based on above S2510-S2523, scenes in the M scenes suitable for the head-mounted device can be determined.

S2524. In a case that the current scene is a scene suitable for the head-mounted device, executing a step of acquiring the real average brightness value of a region of interest of the current frame image in a case that the current frame image is the Nth and subsequent frame image.

In the embodiment of the present application, the current scene of the head-mounted device may be manually input into the head-mounted device by a user.

In the embodiment of the present application, in a case that the current scene of the head-mounted device is a scene suitable for the head-mounted device, executing a step of acquiring the true average brightness value of the region of interest of the current frame image in a case that the current frame image is the Nth and subsequent frame image. Correspondingly, in a case that the current scene of the head-mounted device is not a scene suitable for the head-mounted device, the step of acquiring the true average brightness value of the region of interest of the current frame image in a case that the current frame image is the Nth and subsequent frame image is not executed. This improves the targeting and intelligence of the head-mounted device.

On the basis of the previous embodiment, the method for determining exposure parameters of a head-mounted device provided by an embodiment of the present application further comprises following S2525 and S2526:

S2525. For scene images of scenes for which the head-mounted device is suitable, determining the maximum exposure parameter value and the minimum exposure parameter value corresponding to the corresponding scene image whose offset is less than or equal to the preset offset.

In the embodiment of the present application, based on the above S2523, after a scene used by the head-mounted device is determined, scene images corresponding to scenes that are not applicable are eliminated to obtain scene images of the suitable scenes in above 52525.

S2526. Updating the target exposure parameter list according to the maximum exposure parameter value and the minimum exposure parameter value.

In one embodiment, the specific implementation of above S2526 may be: using an exposure parameter value in the target exposure list equal to the maximum exposure parameter value determined in above S2525, and an exposure parameter value equal to the minimum exposure parameter value determined in above S2525, and exposure parameters value between the exposure parameter value equal to the maximum exposure parameter value determined in above S2525 and the exposure parameter value equal to the minimum exposure parameter value determined in above S2525, as exposure parameter values in the target exposure list.

In another embodiment, the specific implementation of above S2526 may also be: in a case that the maximum exposure parameter value determined in above S2525 is not the maximum exposure parameter value in the target exposure list, and the minimum exposure parameter value determined in above S2525 is not the minimum exposure parameter value in the target exposure list, using an exposure parameter value in the target exposure list that is located next to the maximum exposure parameter value determined in above S2525, an exposure parameter value in the target exposure list that is located previous to the minimum exposure parameter value determined in above S2525, and parameter values between the next exposure parameter value and the previous exposure parameter value, as exposure parameter values in the target exposure list.

In the embodiment of the present application, with above S2525 and S2526, the number of exposure parameter values in the target exposure list can be further reduced, in this way, it can be realized that the average brightness value of a region of interest of current frame image approximate to a preset brightness value in a shorter time.

**<Apparatus Embodiment>**

An embodiment of the present application provides an apparatus 30 for determining exposure parameters of a head-mounted device. As shown in FIG. 3, the apparatus 30 comprises an acquisition module 31, a prediction module 32 and a selection module 33. Wherein:

The acquisition module 31 is configured to, in a case that the current frame image is the Nth and subsequent frame image, acquire the real average brightness value of a region of interest of the current frame image; wherein, N is a positive integer greater than or equal to 2;

The prediction module 32 is configured to determine a predicted average brightness value of the region of interest in the next frame image according to the real average brightness value and a preset smoothing algorithm;

The selection module 33 is configured to, in a case that the predicted average brightness value is less than the lower limit value of a first preset threshold range, sequentially selecting exposure parameter values equal to and greater than the current exposure parameter value in a target exposure list to form a target exposure sub-list for the next frame image; and,

In a case that the predicted average brightness value is greater than or equal to the upper limit value of the first preset threshold range, sequentially selecting exposure parameter values equal to and less than the current exposure parameter value in the target exposure list to form the target exposures sub-list for the next frame image.

In one embodiment, the acquisition module 31 is further configured to: in a case that the current frame image is the Nth and previous frame image, set exposure parameter values in a sequential round-robin manner according to the target exposure list until the average brightness value of the region of interest of the current frame image collected by using corresponding exposure parameter values is within the first preset threshold range;

in a case that the current frame image is the image after the Nth frame, set the exposure parameter value in a sequential round-robin manner according to a target exposure sub-list of the current frame image until the average brightness value of the region of interest of the current frame image collected by using corresponding exposure parameter value is within the first preset threshold range;

use the exposure parameter value corresponding to the current frame image as the current exposure parameter value.

In one embodiment, the preset smoothing algorithm is a three-order exponential smoothing algorithm.

In one embodiment, the acquisition module 31 is further configured to:

acquire an initial exposure list for the head-mounted device;
determine a gain value in the target exposure list according to a gain value in the initial exposure list;
extend an exposure duration in the initial exposure list to obtain an exposure duration in the target exposure list;
wherein, gain values corresponding to different exposure durations in the target exposure list are the same, and exposure parameter values in the target exposure list are arranged in ascending order according to corresponding exposure durations.

In one embodiment, the apparatus 30 for determining exposure parameters of a head-mounted device further comprises an execution module, and the execution module is configured to:

acquire scene images of M scenes using each set of exposure parameter values in the target exposure list; M being a positive integer greater than or equal to 1;

for a scene image of each scene, determine an offset by which the average brightness value of the region of interest of corresponding scene image deviates from the first preset threshold range;

count the number of corresponding scene images corresponding to the offset greater than a preset offset;

in a case that the number is less than a preset threshold, determine that the head-mounted device is suitable for corresponding scene;

in a case that the current scene is a scene suitable for the head-mounted device, execute the step of acquiring the real average brightness value of a region of interest of the current frame image in a case that the current frame image is the Nth and subsequent frame image.

In one embodiment, the apparatus 30 for determining exposure parameters of a head-mounted device further comprises an updating module, and the updating module is configured to:

for scene images of scenes for which the head-mounted device is suitable, determine the maximum exposure parameter value and the minimum exposure parameter value corresponding to the corresponding scene image whose offset is less than or equal to a preset offset;

update the target exposure list according to the maximum exposure parameter value and the minimum exposure parameter value.

In one embodiment, the head-mounted device is any one of a mixed reality device, an augmented reality device, and a virtual reality device.

**<Device Embodiment>**

An embodiment of the present application further provides a head-mounted device 40, as shown in FIG. 4, the head-mounted device 40 comprises an apparatus 30 for determining exposure parameters of a head-mounted device as shown in FIG. 3.

Alternatively, it comprises a memory 41 and a processor 42, the memory 41 is configured to store computer instructions, and the processor 42 is configured to invoke the computer instructions from the memory 41 to execute any of the methods for determining exposure parameters of a head-mounted device provided in above method embodiments.

**<Storage Medium Embodiment>**

An embodiment of the present application further provide a computer-readable storage medium having a computer program stored thereon, which, when executed by a processor, implements any of the methods for determining exposure parameters of a head-mounted device provided according to above method embodiments.

The present application may be a system, method and/or computer program product. The computer program product may include a computer-readable storage medium having computer-readable program instructions thereon for causing a processor to carry out various aspects of the present application.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present application may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++, or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present application.

Aspects of the present application are described herein with reference to flowchart illustrations and/or block diagrams of methods, apparatus (systems), and computer program products according to embodiments of the application. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. It is known to those skilled in the art that implementations in hardware, in software, and in a combination of software and hardware are all equivalent.

Various embodiments of the present application have been described above, and above descriptions are exemplary, not exhaustive, and not limiting of the disclosed embodiments. The terminology used herein was chosen to best explain the principles of the embodiments, the practical application or technical improvement over the technology in the marketplace, or to enable others of ordinary skill in the art to understand the embodiments disclosed herein. The scope of the application is defined by the appended claims.

**Claims**

1. A method for determining exposure parameters of a camera of a mixed reality head-mounted device, an augmented reality head-mounted device, or a virtual reality head-mounted device comprises:

   in a case that the current frame image is the Nth frame or an image after the Nth frame, acquiring (S2100) the real average brightness value of a region of interest of the current frame image; wherein, N is a positive integer greater than or equal to 2;
   determining (S2200) a predicted average brightness value of the region of interest of a next frame image according to the real average brightness value and a preset smoothing algorithm;

in a case that the predicted average brightness value is less than the lower limit value of a first preset threshold range, sequentially selecting (S2300) exposure parameter values equal to and greater than the current exposure parameter value in a target exposure list to form a target exposure sub-list for the next frame image; and

in a case that the predicted average brightness value is greater than or equal to the upper limit value of the first preset threshold range, sequentially selecting (S2400) exposure parameter values equal to and less than the current exposure parameter value in the target exposure list to form the target exposure sub-list for the next frame image,

wherein the method further comprises a step of acquiring the target exposure list, comprising:

acquiring (S2510) an initial exposure list for the head-mounted device, wherein an exposure list includes multiple sets of exposure parameter values, and one set of exposure parameter values includes one gain and one exposure duration, and the initial exposure list of the head-mounted device is a default exposure list that is preset and stored in the head-mounted device;

determining (S2511) a gain value in the target exposure list according to a gain value in the initial exposure list; and

extending (S2512) an exposure duration in the initial exposure list to obtain an exposure duration in the target exposure list;

wherein, gain values corresponding to different exposure durations in the target exposure list are the same, and exposure parameter values in the target exposure list are arranged in ascending order according to corresponding exposure durations,

wherein determining gain values in the target exposure list according to gain values in the initial exposure list includes one of:

determining the minimum gain value in the initial exposure list as a gain value in a target exposure list; and

arranging all gain values in the initial exposure list in ascending order, and using any one of gain values in a preset percentage from a front portion of the gain values arranged in ascending order as a gain value in the target exposure list,

wherein extending an exposure duration in the initial exposure list to obtain an exposure duration in the target exposure list comprises:

fitting exposure durations in the initial exposure list to obtain a curve of the exposure durations;

extending both endpoints of the curve of the exposure durations; and

adding the exposure duration corresponding to the extended portion of the curve to the initial exposure list to determine the exposure durations in the target exposure list,

wherein the method further comprises a step of acquiring the current exposure parameter value, comprising:

in a case that the current frame image is the Nth frame or an image before the Nth frame, setting (S2310) exposure parameter values in a sequential round-robin manner according to the target exposure list until the average brightness value of the region of interest of the current frame image collected by using corresponding exposure parameter values is within the first preset threshold range;

in a case that the current frame image is an image after the Nth frame, setting (S2311) the exposure parameter value in a sequential round-robin manner according to a target exposure sub-list of the current frame image until the average brightness value of the region of interest of the current frame image collected by using corresponding exposure parameter value is within the first preset threshold range; and

using (S2312) the exposure parameter value corresponding to the current frame image as the current exposure parameter value.

2. The method according to claim 1, wherein the preset smoothing algorithm is a third-order exponential smoothing algorithm.

3. The method according to any of claims 1-2, wherein the method further comprises:

acquiring (S2520) scene images of M scenes using each set of exposure parameter values in the target exposure list; M being a positive integer greater than or equal to 1;

for a scene image of each scene, determining (S2521) an offset by which the average brightness value of the region of interest of corresponding scene image deviates from the first preset threshold range;

counting (S2522) the number of corresponding scene images corresponding to the offset greater than a preset offset;

in a case that the number is less than a preset threshold, determining (S2523) that the head-mounted device is suitable for the corresponding scene; and

in a case that the current scene is a scene suitable for the head-mounted device, executing (S2524) the step of acquiring the real average brightness value of a region of interest of the current frame image in a case that the current frame image is the Nth and subsequent frame image.

4. The method according to claim 3, wherein the method further comprises:

for scene images of scenes for which the head-mounted device is suitable, determining (S2525) the maximum exposure parameter value and the minimum exposure parameter value corresponding to the corresponding scene image whose offset is less than or equal to a preset offset; and

updating (52526) the target exposure list according to the maximum exposure parameter value and the minimum exposure parameter value.

5. The method according to any of claims 1-4, wherein the head-mounted device is any one of a mixed reality device, an augmented reality device, and a virtual reality device.

6. The method according to any of claims 1-5, wherein the real average brightness value is within the first preset threshold range.

7. An apparatus (30) for determining exposure parameters of a camera of a mixed reality head-mounted device, an augmented reality head-mounted device, or a virtual reality head-mounted device, comprising:

an acquisition module (31) configured to, in a case that the current frame image is the Nth frame or an image after the Nth frame, acquire (S2100) the real average brightness value of a region of interest of the current frame image; wherein, N is a positive integer greater than or equal to 2;

a prediction module (32) configured to determine (S2200) a predicted average brightness value of the region of interest in the next frame image according to the real average brightness value and a preset smoothing algorithm;

a selection module (33) configured to, in a case that the predicted average brightness value is less than the lower limit value of a first preset threshold range, sequentially select (S2300) exposure parameter values equal to and greater than the current exposure parameter value in a target exposure list to form a target exposure sub-list for the next frame image; and

in a case that the predicted average brightness value is greater than or equal to the upper limit value of the first preset threshold range, sequentially selecting (S2400) exposure parameter values equal to and less than the current exposure parameter value in the target exposure list to form the target exposure sub-list for the next frame image,

wherein the acquisition module (31) is further configured to:

acquire (S2510) an initial exposure list for the head-mounted device, wherein an exposure list includes multiple sets of exposure parameter values, and one set of exposure parameter values includes one gain and one exposure duration, and the initial exposure list of the head-mounted device is a default exposure list that is preset and stored in the head-mounted device;

determine (S2511) a gain value in the target exposure list according to a gain value in the initial exposure list; and

extend (S2512) an exposure duration in the initial exposure list to obtain an exposure duration in the target exposure list;

wherein, gain values corresponding to different exposure durations in the target exposure list are the same, and exposure parameter values in the target exposure list are arranged in ascending order according to corresponding exposure durations,

wherein determining gain values in the target exposure list according to gain values in the initial exposure list includes one of:

determining the minimum gain value in the initial exposure list as a gain value in a target exposure list; and

arranging all gain values in the initial exposure list in ascending order, and using any of gain values in a preset percentage from a front portion of the gain values arranged in ascending order as a gain value in the target exposure list,

wherein extending an exposure duration in the initial exposure list to obtain an exposure duration in the target exposure list comprises:

fitting exposure durations in the initial exposure list to obtain a curve of the exposure durations;
extending both endpoints of the curve of the exposure durations; and
adding the exposure duration corresponding to the extended portion of the curve to the initial exposure list to determine the exposure durations in the target exposure list,

wherein the acquisition module (31) is further configured to acquire the current exposure parameter value, comprising:

in a case that the current frame image is the Nth frame or an image before the Nth frame, setting (S2310) exposure parameter values in a sequential round-robin manner according to the target exposure list until the average brightness value of the region of interest of the current frame image collected by using corresponding exposure parameter values is within the first preset threshold range;
in a case that the current frame image is an image after the Nth frame, setting (S2311) the exposure parameter value in a sequential round-robin manner according to a target exposure sub-list of the current frame image until the average brightness value of the region of interest of the current frame image collected by using corresponding exposure parameter value is within the first preset threshold range; and
using (S2312) the exposure parameter value corresponding to the current frame image as the current exposure parameter value.

8. A head-mounted device (40) comprising the apparatus of claim 7.

9. A non-transitory computer-readable storage medium having a computer program stored thereon, which, when executed by a processor, implements the method of any of claims 1-6.

10. A computer program product comprising computer instructions, the computer instructions, when executed by a processor, implement the method of any of claims 1-6.

**Patentansprüche**

1. Verfahren zum Bestimmen von Belichtungsparametern einer Kamera einer kopfmontierten Mixed-Reality-Vorrichtung, einer kopfmontierten Augmented-Reality-Vorrichtung oder einer kopfmontierten Virtual-Reality-Vorrichtung, das Folgendes umfasst:

falls das aktuelle Rahmenbild der N-te Rahmen oder ein Bild nach dem N-ten Rahmen ist, Ermitteln (S2100) des tatsächlichen mittlere Helligkeitswerts eines Bereichs von Interesse des aktuellen Rahmenbilds; wobei N eine positive ganze Zahl größer oder gleich 2 ist;
Bestimmen (S2200) eines vorhergesagten durchschnittlichen Helligkeitswerts des Bereichs von Interesse in einem nächsten Rahmenbild gemäß dem tatsächlichen durchschnittlichen Helligkeitswert und einem voreingestellten Glättungsalgorithmus;
falls der vorhergesagte durchschnittliche Helligkeitswert unterhalb des unteren Grenzwerts eines ersten voreingestellten Schwellenwertbereichs liegt, sequenzielles Auswählen (S2300) von Belichtungsparameterwerten gleich oder größer als der aktuelle Belichtungsparameterwert in einer Zielbelichtungsliste, um eine Ziel-Belichtungsteilliste für das nächste Rahmenbild zu bilden; und
falls der vorhergesagte durchschnittliche Helligkeitswert größer oder gleich dem oberen Grenzwert des ersten voreingestellten Schwellenwertbereichs liegt, sequenzielles Auswählen (S2400) von Belichtungsparameterwerten gleich oder kleiner als der aktuelle Belichtungsparameterwert in der Zielbelichtungsliste, um die Ziel-Teilliste für das nächste Rahmenbild zu bilden,
wobei das Verfahren ferner einen Schritt zum Ermitteln der Ziel-Belichtungsliste umfasst, umfassend:

Ermitteln (S2510) einer Ausgangs-Belichtungsliste für die kopfmontierte Vorrichtung, wobei eine Belichtungsliste mehrere Sätze von Belichtungsparameterwerten beinhaltet und ein Satz von Belichtungsparameterwerten eine Verstärkung und eine Belichtungsdauer beinhaltet, und die Ausgangs-Belichtungsliste der kopfmontierten Vorrichtung eine Standard-Belichtungsliste ist, die voreingestellt und in der kopfmontierten Vorrichtung gespeichert ist;

Bestimmen (S2511) eines Verstärkungswerts in der Ziel-Belichtungsliste gemäß einem Verstärkungswert in der Ausgangs-Belichtungsliste; und

Erweitern (S2512) einer Belichtungsdauer in der Ausgangs-Belichtungsliste, um eine Belichtungsdauer in der Ziel-Belichtungsliste zu erhalten;

wobei Verstärkungswerte, die verschiedenen Belichtungsdauern in der Ziel-Belichtungsliste entsprechen, gleich sind und Belichtungsparameterwerte in der Ziel-Belichtungsliste in aufsteigender Reihenfolge gemäß entsprechenden Belichtungsdauern angeordnet sind,

wobei Bestimmen von Verstärkungswerten in der Zielbelichtungsliste gemäß Verstärkungswerten in der Ausgangs-Belichtungsliste eines des Folgenden beinhaltet:

Bestimmen des minimalen Verstärkungswerts in der Ausgangs-Belichtungsliste als einen Verstärkungswert in einer Ziel-Belichtungsliste; und

Anordnen aller Verstärkungswerte in der Ausgangs-Belichtungsliste in aufsteigender Reihenfolge, und Verwenden eines von Verstärkungswerten innerhalb eines voreingestellten Prozentsatzes aus einem vorderen Bereich der in aufsteigender Reihenfolge angeordneten Verstärkungswerte als einen Verstärkungswert in der Ziel-Belichtungsliste,

wobei Erweitern einer Belichtungsdauer in der Ausgangs-Belichtungsliste, um eine Belichtungsdauer in der Ziel-Belichtungsliste zu erhalten, Folgendes umfasst:

Anpassen von Belichtungsdauern in der Ausgangs-Belichtungsliste, um eine Kurve der Belichtungsdauern zu erhalten;

Erweitern beider Endpunkte der Kurve der Belichtungsdauern; und

Hinzufügen der Belichtungsdauer, die dem erweiterten Abschnitt der Kurve entspricht, zu der Ausgangs-Belichtungsliste, um die Belichtungsdauern in der Ziel-Belichtungsliste zu bestimmen,

wobei das Verfahren ferner einen Schritt zum Ermitteln des aktuellen Belichtungsparameterwerts umfasst, umfassend:

falls das aktuelle Rahmenbild der N-te Rahmen oder ein Bild vor dem N-ten Rahmen ist, Einstellen (S2310) von Belichtungsparameterwerten in einer sequenziellen Round-Robin-Weise gemäß der Ziel-Belichtungsliste, bis der durchschnittliche Helligkeitswert des Bereichs von Interesse des aktuellen Rahmenbilds, der unter Verwendung entsprechender Belichtungsparameterwerte bezogen wird, innerhalb des ersten voreingestellten Schwellenwertbereichs liegt;

falls das aktuelle Rahmenbild ein Bild nach dem N-ten Rahmen ist, Einstellen (S2311) des Belichtungsparameterwerts in einer sequenziellen Round-Robin-Weise gemäß einer Ziel-Belichtungsteilliste des aktuellen Rahmenbilds, bis der durchschnittliche Helligkeitswert des Bereichs von Interesse des aktuellen Rahmenbilds, der unter Verwendung eines entsprechenden Belichtungsparameterwerts bezogen wird, innerhalb des ersten voreingestellten Schwellenwertbereichs liegt; und

Verwenden (S2312) des Belichtungsparameterwerts, der dem aktuellen Rahmenbild entspricht, als den aktuellen Belichtungsparameterwert.

2. Verfahren nach Anspruch 1, wobei der voreingestellte Glättungsalgorithmus ein exponentieller Glättungsalgorithmus dritter Ordnung ist.

3. Verfahren nach einem der Ansprüche 1-2, wobei das Verfahren ferner Folgendes umfasst:

Ermitteln (S2520) von Szenenbildern von M Szenen unter Verwendung jedes Satzes von Belichtungsparameterwerten in der Zielbelichtungsliste; wobei M eine positive ganze Zahl größer oder gleich 1 ist;

für ein Szenenbild jeder Szene, Bestimmen (S2521) eines Versatzes, um den der durchschnittliche Helligkeitswert des Bereichs von Interesse eines entsprechenden Szenenbildes vom ersten voreingestellten Schwellenwertbereich abweicht;

Zählen (S2522) der Anzahl entsprechender Szenenbilder, die dem Versatz größer als ein voreingestellter Versatz entsprechen;

falls die Zahl kleiner als ein voreingestellter Schwellenwert ist, Bestimmen (S2523), dass die kopfmontierte Vorrichtung für die entsprechende Szene geeignet ist; und

falls die aktuelle Szene eine für die kopfmontierte Vorrichtung geeignete Szene ist, Ausführen (S2524) des Schritts zum Ermitteln des tatsächlichen durchschnittlichen Helligkeitswert eines Bereichs von Interesse des aktuellen Rahmenbilds, falls das aktuelle Rahmenbild das N-te und nachfolgende Rahmenbild ist.

4. Verfahren nach Anspruch 3, wobei das Verfahren ferner Folgendes umfasst:

für Szenenbilder von Szenen, für die die kopfmontierte Vorrichtung geeignet ist, Bestimmen (S2525) des maximalen Belichtungsparameterwerts und des minimalen Belichtungsparameterwerts, die dem entsprechenden Szenenbild entsprechen, dessen Versatz kleiner oder gleich einem voreingestellten Versatz ist; und Aktualisieren (S2526) der Ziel-Belichtungsliste gemäß dem maximalen Belichtungsparameterwert und dem minimalen Belichtungsparameterwert.

5. Verfahren nach einem der Ansprüche 1-4, wobei die kopfmontierte Vorrichtung eine von einer Mixed-Reality-Vorrichtung, einer Augmented-Reality-Vorrichtung und einer Virtual-Reality-Vorrichtung ist.

6. Verfahren nach einem der Ansprüche 1-5, wobei der tatsächliche durchschnittliche Helligkeitswert innerhalb des ersten voreingestellten Schwellenwertbereichs liegt.

7. Einrichtung (30) zum Bestimmen von Belichtungsparametern einer Kamera einer kopfmontierten Mixed-Reality-Vorrichtung, einer kopfmontierten Augmented-Reality-Vorrichtung oder einer kopfmontierten Virtual-Reality-Vorrichtung, die Folgendes umfasst:

ein Ermittlungsmodul (31), das dazu konfiguriert ist, falls das aktuelle Rahmenbild der N-te Rahmen oder ein Bild nach dem N-ten Rahmen ist, den tatsächlichen mittleren Helligkeitswert eines Bereichs von Interesse des aktuellen Rahmenbilds zu ermitteln (S2100); wobei N eine positive ganze Zahl größer oder gleich 2 ist;

ein Vorhersagemodul (32), das dazu konfiguriert ist, einen vorhergesagten durchschnittlichen Helligkeitswert des Bereichs von Interesse im nächsten Rahmenbild gemäß dem tatsächlichen durchschnittlichen Helligkeitswert und einem voreingestellten Glättungsalgorithmus zu bestimmen (S2200);

ein Auswahlmodul (33), das dazu konfiguriert ist, falls der vorhergesagte durchschnittliche Helligkeitswert unterhalb des unteren Grenzwerts eines ersten voreingestellten Schwellenwertbereichs liegt, Belichtungsparameterwerte gleich oder größer als der aktuelle Belichtungsparameterwert in einer Zielbelichtungsliste sequenziell auszuwählen (S2300), um eine Ziel-Belichtungsteilliste für das nächste Rahmenbild zu bilden; und falls der vorhergesagte durchschnittliche Helligkeitswert größer oder gleich dem oberen Grenzwert des ersten voreingestellten Schwellenwertbereichs liegt, sequenzielles Auswählen (S2400) von Belichtungsparameterwerten gleich oder kleiner als der aktuelle Belichtungsparameterwert in der Zielbelichtungsliste, um die Ziel-Belichtungsteilliste für das nächste Rahmenbild zu bilden,

wobei das Ermittlungsmodul (31) ferner für Folgendes konfiguriert ist:

Ermitteln (S2510) einer Ausgangs-Belichtungsliste für die kopfmontierte Vorrichtung, wobei eine Belichtungsliste mehrere Sätze von Belichtungsparameterwerten beinhaltet und ein Satz von Belichtungsparameterwerten eine Verstärkung und eine Belichtungsdauer beinhaltet, und die Ausgangs-Belichtungsliste der kopfmontierten Vorrichtung eine Standard-Belichtungsliste ist, die voreingestellt und in der kopfmontierten Vorrichtung gespeichert ist;

Bestimmen (S2511) eines Verstärkungswerts in der Ziel-Belichtungsliste gemäß einem Verstärkungswert in der Ausgangs-Belichtungsliste; und

Erweitern (S2512) einer Belichtungsdauer in der Ausgangs-Belichtungsliste, um eine Belichtungsdauer in der Ziel-Belichtungsliste zu erhalten; wobei Verstärkungswerte, die verschiedenen Belichtungsdauern in der Ziel-Belichtungsliste entsprechen, gleich sind und Belichtungsparameterwerte in der Ziel-Belichtungsliste in aufsteigender Reihenfolge gemäß entsprechenden Belichtungsdauern angeordnet sind,

wobei Bestimmen von Verstärkungswerten in der Zielbelichtungsliste gemäß Verstärkungswerten in der Ausgangs-Belichtungsliste eines des Folgenden beinhaltet:

Bestimmen des minimalen Verstärkungswerts in der Ausgangs-Belichtungsliste als einen Verstärkungswert in einer Ziel-Belichtungsliste; und

Anordnen aller Verstärkungswerte in der Ausgangs-Belichtungsliste in aufsteigender Reihenfolge, und Verwenden eines von Verstärkungswerten innerhalb eines voreingestellten Prozentsatzes aus einem vorderen Bereich der in aufsteigender Reihenfolge angeordneten Verstärkungswerte als einen Verstärkungswert in der Ziel-Belichtungsliste,

wobei Erweitern einer Belichtungsdauer in der Ausgangs-Belichtungsliste, um eine Belichtungsdauer in der Ziel-Belichtungsliste zu erhalten, Folgendes umfasst:

Anpassen von Belichtungsdauern in der Ausgangs-Belichtungsliste, um eine Kurve der Belichtungsdauern zu erhalten;
Erweitern beider Endpunkte der Kurve der Belichtungsdauern; und
Hinzufügen der Belichtungsdauer, die dem erweiterten Abschnitt der Kurve entspricht, zu der Ausgangs-Belichtungsliste, um die Belichtungsdauern in der Ziel-Belichtungsliste zu bestimmen,

wobei das Ermittlungsmodul (31) ferner dazu konfiguriert ist, den aktuellen Belichtungsparameterwert zu ermitteln, umfassend:

falls das aktuelle Rahmenbild der N-te Rahmen oder ein Bild vor dem N-ten Rahmen ist, Einstellen (S2310) von Belichtungsparameterwerten in einer sequenziellen Round-Robin-Weise gemäß der Ziel-Belichtungsliste, bis der durchschnittliche Helligkeitswert des Bereichs von Interesse des aktuellen Rahmenbilds, der unter Verwendung entsprechender Belichtungsparameterwerte bezogen wird, innerhalb des ersten voreingestellten Schwellenwertbereichs liegt;
falls das aktuelle Rahmenbild ein Bild nach dem N-ten Rahmen ist, Einstellen (S2311) des Belichtungsparameterwerts in einer sequenziellen Round-Robin-Weise gemäß einer Ziel-Belichtungsteilliste des aktuellen Rahmenbilds, bis der durchschnittliche Helligkeitswert des Bereichs von Interesse des aktuellen Rahmenbilds, der unter Verwendung eines entsprechenden Belichtungsparameterwerts bezogen wird, innerhalb des ersten voreingestellten Schwellenwertbereichs liegt; und
Verwenden (S2312) des Belichtungsparameterwerts, der dem aktuellen Rahmenbild entspricht, als den aktuellen Belichtungsparameterwert.

8. Kopfmontierte Vorrichtung (40), die die Einrichtung nach Anspruch 7 umfasst.

9. Computerlesbares Speichermedium, das ein Computerprogramm darauf gespeichert aufweist, das, wenn es von einem Prozessor ausgeführt wird, das Verfahren nach einem der Ansprüche 1-6 implementiert.

10. Computerprogrammprodukt, das Computeranweisungen umfasst, wobei die Computeranweisungen, wenn sie von einem Prozessor ausgeführt werden, das Verfahren nach einem der Ansprüche 1-6 implementieren.

**Revendications**

1. Procédé destiné à déterminer des paramètres d'exposition d'une caméra d'un dispositif de réalité mixte monté sur la tête, d'un dispositif de réalité augmentée monté sur la tête ou d'un dispositif de réalité virtuelle monté sur la tête comprenant :

dans le cas où l'image de trame actuelle est la Nème trame ou une image suivant la Nème trame, l'acquisition (S2100) de la valeur de luminosité moyenne réelle d'une région d'intérêt de l'image de trame actuelle ; dans lequel N est un entier positif supérieur ou égal à 2 ;
la détermination (S2200) d'une valeur de luminosité moyenne prédite de la région d'intérêt d'une image de trame suivante selon la valeur de luminosité moyenne réelle et un algorithme de lissage prédéfini ;
dans le cas où la valeur de luminosité moyenne prédite est inférieure à la valeur limite inférieure d'une première plage de seuil prédéfinie, la sélection séquentielle (S2300) de valeurs de paramètres d'exposition égales et supérieures à la valeur actuelle de paramètre d'exposition dans une liste d'exposition cible pour former une sous-liste d'exposition cible pour l'image de trame suivante ; et
dans le cas où la valeur de luminosité moyenne prédite est supérieure ou égale à la valeur limite supérieure de la première plage de seuil prédéfinie, la sélection séquentielle (S2400) de valeurs de paramètres d'exposition égales et inférieures à la valeur actuelle de paramètre d'exposition dans la liste d'exposition cible pour former la sous-liste cible pour l'image de trame suivante,

dans lequel le procédé comprend en outre une étape d'acquisition de la liste d'exposition cible, comprenant :

l'acquisition (S2510) d'une liste d'exposition initiale pour le dispositif monté sur la tête, dans lequel une liste d'exposition inclut de multiples ensembles de valeurs de paramètres d'exposition et un ensemble de valeurs de paramètres d'exposition inclut un gain et une durée d'exposition et la liste d'exposition initiale du dispositif monté sur la tête est une liste d'exposition par défaut qui est prédéfinie et stockée dans le dispositif monté sur la tête ;

la détermination (S2511) d'une valeur de gain dans la liste d'exposition cible selon une valeur de gain dans la liste d'exposition initiale ; et

l'extension (S2512) d'une durée d'exposition dans la liste d'exposition initiale pour obtenir une durée d'exposition dans la liste d'exposition cible ;

dans lequel des valeurs de gain correspondant à différentes durées d'exposition dans la liste d'exposition cible sont identiques et des valeurs de paramètres d'exposition dans la liste d'exposition cible sont agencées par ordre croissant selon des durées d'exposition correspondantes,

dans lequel la détermination de valeurs de gain dans la liste d'exposition cible selon des valeurs de gain dans la liste d'exposition initiale inclut l'une des options suivantes :

la détermination de la valeur de gain minimale dans la liste d'exposition initiale comme valeur de gain dans une liste d'exposition cible ; et

l'agencement de toutes les valeurs de gain de la liste d'exposition initiale par ordre croissant et l'utilisation de l'une quelconque des valeurs de gain dans un pourcentage prédéfini de la partie avant des valeurs de gain agencées par ordre croissant comme valeur de gain dans la liste d'exposition cible,

dans lequel l'extension de la durée d'exposition figurant dans la liste d'exposition initiale pour obtenir une durée d'exposition dans la liste d'exposition cible comprend :

l'ajustement des durées d'exposition dans la liste d'exposition initiale pour obtenir une courbe des durées d'exposition ;

l'extension des deux extrémités de la courbe des durées d'exposition ; et

l'ajout de la durée d'exposition correspondant à la portion étendue de la courbe à la liste d'exposition initiale pour déterminer les durées d'exposition dans la liste d'exposition cible,

dans lequel le procédé comprend en outre une étape d'acquisition de la valeur actuelle de paramètre d'exposition, comprenant :

dans le cas où l'image de trame actuelle est la Nème trame ou une image avant la Nème trame, la définition des valeurs de paramètres d'exposition (S2310) de manière séquentielle selon la liste d'exposition cible jusqu'à ce que la valeur de luminosité moyenne de la région d'intérêt de l'image de l'image de trame actuelle collectée à l'aide de valeurs de paramètres d'exposition correspondantes soit dans la première plage de seuil prédéfinie ;

dans le cas où l'image de trame actuelle est une image postérieure à la Nème trame, la définition (S2311) de la valeur du paramètre d'exposition de manière séquentielle selon une sous-liste d'exposition cible de l'image de trame actuelle jusqu'à ce que la valeur de luminosité moyenne de la région d'intérêt de l'image de la trame courante collectée à l'aide de la valeur de paramètre d'exposition correspondante soit dans la première plage de seuil prédéfinie ; et

l'utilisation (S2312) de la valeur de paramètre d'exposition correspondant à l'image de trame actuelle comme valeur actuelle de paramètre d'exposition.

2. Procédé selon la revendication 1, dans lequel l'algorithme de lissage prédéfini est un algorithme de lissage exponentiel de troisième ordre.

3. Procédé selon l'une quelconque des revendications 1-2, dans lequel le procédé comprend en outre :

l'acquisition (S2520) d'images de scènes de M scènes en utilisant chaque ensemble de valeurs de paramètres d'exposition dans la liste d'exposition cible ; M étant un entier positif supérieur ou égal à 1 ;

pour une image de scène de chaque scène, la détermination (S2521) d'un décalage par lequel la valeur de luminosité moyenne de la région d'intérêt de l'image de scène correspondante s'écarte de la première plage de seuil prédéfinie ;

le comptage (S2522) du nombre d'images de scène correspondantes correspondant au décalage supérieur à un décalage prédéfini ;

dans le cas où le nombre est inférieur à un seuil prédéfini, la détermination (S2523) que le dispositif monté sur la tête est adapté à la scène correspondante ; et

dans le cas où la scène actuelle est une scène adaptée au dispositif monté sur la tête, l'exécution (S2524) de l'étape d'acquisition de la valeur de luminosité moyenne réelle d'une région d'intérêt de l'image de trame actuelle dans le cas où l'image de trame actuelle est la Nème image de trame et les suivantes.

4. Procédé selon la revendication 3, dans lequel le procédé comprend en outre :

pour des images de scène pour lesquelles le dispositif monté sur la tête est adapté, la détermination (S2525) de la valeur maximale de paramètre d'exposition et la valeur minimale de paramètre d'exposition correspondant à l'image de scène correspondante dont un décalage est inférieur ou égal à un décalage prédéfini ; et

la mise à jour (S2526) de la liste d'exposition cible selon la valeur de paramètre d'exposition maximale et la valeur du paramètre d'exposition minimale.

5. Procédé selon l'une quelconque des revendications 1-4, dans lequel le dispositif monté sur la tête est l'un parmi un dispositif de réalité mixte, un dispositif de réalité augmentée et un dispositif de réalité virtuelle.

6. Procédé selon l'une quelconque des revendications 1-5, dans lequel la valeur de luminosité moyenne réelle se situe dans la première plage de seuil prédéfinie.

7. Appareil (30) destiné à déterminer des paramètres d'exposition d'une caméra d'un dispositif de réalité mixte monté sur la tête, d'un dispositif de réalité augmentée monté sur la tête ou d'un dispositif de réalité virtuelle monté sur la tête, comprenant :

un module d'acquisition (31) configuré pour, dans le cas où l'image de trame actuelle est la Nème trame ou une image après la Nème trame, l'acquisition (S2100) de la valeur de luminosité moyenne réelle d'une région d'intérêt de l'image de trame actuelle ; dans lequel N est un entier positif supérieur ou égal à 2 ;

un module de prédiction (32) configuré pour déterminer (S2200) une valeur de luminosité moyenne prédite de la région d'intérêt dans l'image de trame suivante selon la valeur de luminosité moyenne réelle et un algorithme de lissage prédéfini ;

un module de sélection (33) configuré pour, dans le cas où la valeur de luminosité moyenne prédite est inférieure à la valeur limite inférieure d'une première plage de seuil prédéfinie, sélectionner séquentiellement (S2300) des valeurs de paramètres d'exposition égales et supérieures à la valeur actuelle de paramètre d'exposition dans une liste d'exposition cible pour former une sous-liste d'exposition cible pour l'image de trame suivante ; et

dans le cas où la valeur de luminosité moyenne prédite est supérieure ou égale à la valeur limite supérieure de la première plage de seuil prédéfinie, sélectionner séquentiellement (S2400) des valeurs de paramètres d'exposition égales et inférieures à la valeur actuelle de paramètre d'exposition dans la liste d'exposition cible pour former la sous-liste d'exposition cible pour l'image de trame suivante,

dans lequel le module d'acquisition (31) est en outre configuré pour :

acquérir (S2510) une liste d'exposition initiale pour le dispositif monté sur la tête, dans lequel une liste d'exposition inclut de multiples ensembles de valeurs de paramètres d'exposition et un ensemble de valeurs de paramètres d'exposition inclut un gain et une durée d'exposition et la liste d'exposition initiale du dispositif monté sur la tête est une liste d'exposition par défaut qui est prédéfinie et stockée dans le dispositif monté sur la tête ;

déterminer (S2511) une valeur de gain dans la liste d'exposition cible selon une valeur de gain dans la liste d'exposition initiale ; et

étendre (S2512) une durée d'exposition dans la liste d'exposition initiale pour obtenir une durée d'exposition dans la liste d'exposition cible ; dans lequel des valeurs de gain correspondant à différentes durées d'exposition dans la liste d'exposition cible sont les mêmes et des valeurs de paramètres d'exposition dans la liste d'exposition cible sont agencées par ordre croissant selon des durées d'exposition correspondantes,

dans lequel la détermination de valeurs de gain dans la liste d'exposition cible selon des valeurs de gain dans la liste d'exposition initiale inclut l'une des options suivantes :

la détermination de la valeur de gain minimale dans la liste d'exposition initiale comme valeur de gain dans une liste d'exposition cible ; et

l'agencement de toutes les valeurs de gain dans la liste d'exposition initiale par ordre croissant et l'utilisation de l'une quelconque des valeurs de gain dans un pourcentage prédéfini d'une partie avant des valeurs de gain agencées par ordre croissant comme valeur de gain dans la liste d'exposition cible,

dans lequel l'extension de la durée d'exposition dans la liste d'exposition initiale pour obtenir une durée d'exposition figurant dans la liste d'exposition cible comprend :

l'ajustement des durées d'exposition dans la liste d'exposition initiale pour obtenir une courbe des durées d'exposition ;

l'extension des deux extrémités de la courbe des durées d'exposition ; et

l'ajout de la durée d'exposition correspondant à la portion étendue de la courbe à la liste d'exposition initiale pour déterminer les durées d'exposition dans la liste d'exposition cible,

dans lequel le module d'acquisition (31) est en outre configuré pour acquérir la valeur actuelle de paramètre d'exposition, comprenant :

dans le cas où l'image de trame actuelle est la Nème trame ou une image avant la Nème trame, la définition des valeurs de paramètres d'exposition (S2310) de manière séquentielle selon la liste d'exposition cible jusqu'à ce que la valeur de luminosité moyenne de la région d'intérêt de l'image de trame actuelle collectée à l'aide de valeurs de paramètres d'exposition correspondantes soit dans la première plage de seuil prédéfinie ;

dans le cas où l'image de trame actuelle est une image postérieure à la Nème trame, la définition (S2311) de la valeur de paramètre d'exposition de manière séquentielle selon une sous-liste d'exposition cible de l'image de trame actuelle jusqu'à ce que la valeur de luminosité moyenne de la région d'intérêt de l'image de trame actuelle collectée à l'aide de la valeur de paramètre d'exposition correspondante soit dans la première plage de seuil prédéfinie ; et

l'utilisation (S2312) de la valeur de paramètre d'exposition correspondant à l'image de trame actuelle comme valeur actuelle de paramètre d'exposition.

8. Dispositif monté sur la tête (40) comprenant l'appareil selon la revendication 7.

9. Support de stockage non transitoire lisible par ordinateur présentant un programme informatique stocké sur celui-ci qui, lorsqu'il est exécuté par un processeur, met en œuvre le procédé selon l'une quelconque des revendications 1-6.

10. Produit de programme informatique comprenant des instructions informatiques, les instructions informatiques, lorsqu'elles sont exécutées par un processeur, mettent en œuvre le procédé selon l'une quelconque des revendications 1-6.

Head-mounted
device 1000

| | |
|---|---|
| Processor 1100 | Display apparatus 1500 |
| Memory 1200 | Input apparatus 1600 |
| Interface apparatus 1300 | Speaker 1700 |
| Communication apparatus 1400 | Microphone 1800 |

Fig. 1

In a case that the current frame image is the Nth and subsequent frame image, acquiring the real average brightness value of a region of interest of the current frame image — S2100

Determining a predicted average brightness value of the region of interest in the next frame image according to the real average brightness value and a preset smoothing algorithm — S2200

S2400 — In a case that the predicted average brightness value is greater than or equal to the upper limit value of the first preset threshold range, sequentially selecting exposure parameter values equal to and less than the current exposure parameter value in the target exposure list to form the target exposure sub-list of the next frame image

In a case that the predicted average brightness value is less than the lower limit Value of the first preset threshold range, sequentially selecting exposure parameter values equal to and greater than the current exposure parameter value in the target exposure list to form a target exposure sub-list of the next frame image — S2300

Fig. 2

Acquisition module 31

Prediction module 32

Selction Module 33

Apparatus 30 for determining exposure parameters of a head-mounted device

Fig. 3

Memory 41

Processor 42

Head-mounted device 40

Fig. 4

**EP 4 203 459 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010857729
- WO 2011157245 A2
- JP 2006317406 B